# EUROPÄISCHE PATENTSCHRIFT

(11) **EP 3 770 819 B1**
(45) Veröffentlichungstag und Bekanntmachung des Hinweises auf die Patenterteilung: **28.08.2024**
(21) Anmeldenummer: 20187297.5
(22) Anmeldetag: 23.07.2020
(51) Int. Cl.: G06K 19/073

(54) **TRÄGERSCHICHT UND WERT- ODER SICHERHEITSDOKUMENT**
CARRIER LAYER AND VALUE OR SECURITY DOCUMENT
COUCHE PORTEUSE ET DOCUMENT DE VALEUR OU DE SÉCURITÉ

(30) Priorität: 25.07.2019 DE 102019120106
(43) Veröffentlichungstag der Anmeldung: 27.01.2021
(73) Patentinhaber: Bundesdruckerei GmbH, 10969 Berlin (DE)
(72) Erfinder: Pfeiffer, Christoph, 10243 Berlin (DE); Dorschan, Lydia, 12047 Berlin (DE); Haerecke, Volker, 16225 Eberswalde (DE); Sauer, Tatjana, 10409 Berlin (DE); Ferrara, Elisa, 10555 Berlin (DE); Heenemann, David, 16225 Eberswalde (DE); Dittrich, Bettina, 12167 Berlin (DE); Jaschik, Leif, 21641 Apensen (DE); Bouchain, David, 22087 Hamburg (DE); Venz, Bastian, 22964 Steinburg (DE); Meinicke, Stefan, 30659 Hannover (DE); Voro, Matthias, 13831 Mahlow (DE)
(74) Vertreter: Hentrich Patent- & Rechtsanwaltspartnerschaft mbB

(56) Entgegenhaltungen:
- EP-A2- 1 030 266
- DE-A1- 19 645 083
- US-A1- 2009 230 197
- US-A1- 2009 272 815
- US-A1- 2012 181 158

## Beschreibung

Die Erfindung betrifft ein Wert- oder Sicherheitsdokument umfassend einen RFID-Transponder, wobei das Wert- oder Sicherheitsdokument als ein laminierter Schichtverbund aus mehreren Schichten gebildet ist, wovon eine der Schichten als eine innerhalb des Schichtverbunds positionierte Trägerschicht ist, auf welcher eine elektrische Leiterbahn des RFID-Transponders aufgebracht ist.

Eine Trägerschicht der eingangs genannten Art ist beispielsweise aus der DE 10 2017 210 217 A1 bekannt. So umfassen RFID-Transponder, die auch als RFID-Etiketten ("radio frequency identification"-Etiketten bzw. Etiketten zur Identifizierung mit Hilfe elektromagnetischer Wellen) bezeichnet werden, eine Antenne in Form einer auf einer Folie aufgebrachten, insbesondere aufgedruckten, Leiterbahn, die mit einem RFID-Chip verbunden ist und sowohl der Energieversorgung als auch der Kommunikation mit einem RFID-Lesegerät dient. Die Leiterbahn ist vorzugsweise spulenförmig ausgestaltet und ist an zwei voneinander entfernten Antennenabgriffen mit entsprechenden Kontakten des RFID-Chips verbunden.

Auch ein eingangs erwähntes Wert- oder Sicherheitsdokument mit einem solchen RFID-Transponder ist in der vorstehend genannten Druckschrift beschrieben. Wert- oder Sicherheitsdokumente dienen beispielsweise dazu, die Identität einer Person oder Sache oder einen Anspruch, beispielsweise auf Zahlung eines Geldbetrages oder auf Herausgabe eines Produktes oder Erbringung einer Dienstleistung, zu verifizieren. Hierbei ist sicherzustellen, dass das Wert- oder Sicherheitsdokument nicht oder nur mit erheblichem Aufwand imitiert, gefälscht oder verfälscht werden kann. Außerdem sind die RFID-Transponder in solchen Wert- oder Sicherheitsdokumenten dauerhaft betriebsbereit und auslesbar, weshalb Vorkehrungen zu treffen sind, die ein unbefugtes Auslesen des RFID-Chips verhindern. In diesem Zusammenhang ist es beispielsweise bekannt, passive oder aktive Blocker-Karten zur Blockierung des RFID-Signals in unmittelbarer Nähe zu dem Wert- oder Sicherheitsdokument zu positionieren, um das Auslesen des RFID-Chips des Wert- oder Sicherheitsdokuments zu verhindern. Letzteres ist insbesondere im Falle von mit einem RFID-Transponder ausgestatten Kreditkarten der Fall, die bei der kontaktlosen Abbuchung von Kleinbeträgen keine zusätzliche Sicherheitsstufe, beispielsweise durch Abfragen einer persönlichen Identifikationsnummer, aufweisen.

In der US 2009 / 272 815 A1 wird eine Karte mit einem RFID-Modul beschrieben, dessen Antenne mittels eines Schalters durch Druckbeaufschlagung der Karte aktiviert werden kann: Hierbei ist die Vorderseite mit einem Symbol oder einem Hinweis als Indikator versehen, um anzugeben, an welcher Stelle sich der Schalter für das Aktivieren der Antenne befindet.

Die EP 1 030 266 A1 zeigt eine Karte mit einer Trägerschicht, einem IC, die über einen Schalter mit einem RFID-Modul verbunden ist. Die Aktivierung der Karte erfolgt mittels des Schalters. Der Beschreibung ist zu entnehmen, dass der Schalter auf der Oberfläche der Trägerschicht exponiert sein muss, damit er betätigt werden kann. Beispielsweise kann der Schalter ein Druckknopf, ein taktiler Schalter oder ein elektrischer Kontakt sein.

Die US 2009 / 230 197 A1 beschreibt ein Inlay mit einer unterbrochenen Antenne, wobei die Unterbrechung durch eine Druckbelastung der Karte geschlossen werden kann, um die Antenne zu aktivieren. Hierbei wird die untere Elektrode bei Druckbeaufschlagung der oberen Elektrode unter Komprimierung des Materials kontaktiert, um die Antenne des RFID-Inlays zu aktivieren.

Die DE 196 45 083 A1 beschreibt eine kontaktlose Chipkarte mit Transponderspule, die mit einem Überbrückungselement gebildet ist, um die Kontakte einer Antenne zu schließen und diese damit zu aktivieren.

Die US 2012 / 0 181 158 A1 beschreibt eine geöffneten Spule eines RFID-Inlays mit zwei voneinander beabstandeten Kontakten. Die beiden offenen Kontakte werden durch die Elektrodermalität der menschlichen Haut überbrückt, so dass die Antennenspule aus einer inaktiven in eine aktivierte Konfiguration überführt wird.

Es ist daher die Aufgabe der vorliegenden Erfindung, ein Wert- oder Sicherheitsdokument anzugeben, das gegenüber den bekannten Wert- oder Sicherheitsdokumenten eine zusätzliche Sicherheitsfunktion im Falle eines Diebstahls bietet.

Die vorstehende Aufgabe wird mit einem Wert- oder Sicherheitsdokument mit dem Merkmalsbestand des Anspruchs 1 gelöst. Vorteilhafte Ausgestaltungen mit zweckmäßigen Weiterbildungen der Erfindung sind in den abhängigen Ansprüchen angegeben.

Die Trägerschicht des erfindungsgemäßen Wert- oder Sicherheitsdokuments zeichnet sich insbesondere dadurch aus, dass die Leiterbahn mindestens eine Schaltstelle aufweist, die ausgebildet ist, überführt zu werden zwischen einer geschlossenen Konfiguration, in welcher die Leiterbahn eine aktive oder aktivierte Antenne des RFID-Transponders ausbildet, und einer unterbrochenen Konfiguration, in welcher die Leiterbahn eine inaktive oder deaktivierte Antenne des RFID-Transponders ausbildet.

Die Schaltstelle weist vorzugsweise eine physikalische Unterbrechung der Leiterbahn auf, die bedarfsweise geschlossen, mithin überbrückt werden kann, um aus der Leiterbahn dann eine aktive Antenne des RFID-Transponders zu bilden. Somit kann der Benutzer der Trägerschicht, oder des eine solche umfassenden Wert- oder Sicherheitsdokuments, die Antenne des RFID-Transponders bedarfsweise "einschalten", d.h. eine Datenübertragung zwischen RFID-Chip und einem RFID-Lesegerät ermöglichen, und "ausschalten", d.h. eine Datenübertragung zwischen dem RFID-Chip und einem RFID-Lesegerät unterbinden.

Eine verbesserte Fälschungssicherheit der Trägerschicht liegt vor, wenn - erfindungsgemäß - die Schaltstelle für das menschliche Auge versteckt angeordnet ist. Die Fälschungssicherheit wird ergänzend dadurch verbessert, dass die Schaltstelle derart an der Trägerschicht festgelegt oder darin eingebunden ist, dass die Position der Schaltstelle taktil von einem Menschen nicht erfassbar, mithin also nicht ertastbar ist.

Es liegt eine erhöhte Bedien- oder Schaltsicherheit vor, wenn die Schaltstelle zwei Kontakte umfasst, die mit einem eine elektrische Mindestleitfähigkeit aufweisenden Überbrückungselement elektrisch verbindbar sind, um die Schaltstelle aus der unterbrochenen Konfiguration in die geschlossene Konfiguration zu überführen. Wird das Überbrückungselement wieder von den beiden Kontakten gelöst, so wird die Trägerschicht aus der geschlossenen Konfiguration in die unterbrochene Konfiguration zurückgeführt. Vorzugsweise ist der Trägerfolie ein solches Überbrückungselement zugeordnet oder in diese eingebettet.

Es ist bevorzugt, wenn die Leiterbahn und/oder das Überbrückungselement aus einem elektrisch leitenden Material, beispielsweise in Form einer Silberleitpaste, einer Kupferpaste oder in Form einer anderen geeigneten elektrisch leitfähigen Legierung gebildet sind. Die vorstehend erwähnten Materialen eignen sich gut für den Druck von Leiterbahnen und von Abschnitten von Leiterbahnen, die als Überbrückungselement dienen. Dabei kann eine Druckeinrichtung zum Drucken der Leiterbahn und/oder des Überbrückungselements Einsatz finden, die beispielsweise als ein Inkjet-Drucker gebildet ist, der ausgebildet ist, eine Flüssigtinte (umgangssprachlich eine "jetbare" Tinte) auf die Trägerschicht und/oder auf etwaig vorhandene weitere Schichten aufdrucken. Die Druckeinrichtung kann aber auch als eine Digitaldruckeinrichtung gebildet sein. Alternativ ist die Möglichkeit eröffnet, dass die Druckeinrichtung die Leiterbahn und/oder des Überbrückungselements im Siebdruckverfahren aufbringt.

Es ist alternativ oder ergänzend möglich, Antennen zu verwenden, die aus Draht geformt sind. Alternativ oder zusätzlich kann auch eine geätzte Antenne Einsatz finden.

Für das Überbrückungselement ist die Möglichkeit eröffnet, dass dieses ein Objekt mit einer der Mindestleitfähigkeit entsprechenden elektrodermalen Aktivität ist. Das Überbrückungselement zur Verbindung der beiden Kontakte kann also ein Teil des menschlichen Körpers, beispielsweise der menschlichen Hand, insbesondere der Finger sein. Die Hautleitfähigkeit beträgt im Falle der tonischen Leitfähigkeit von 2 Mikrosiemens (µS) bis 20 Mikrosiemens, phasische Änderungen der Leitfähigkeit liegen im Bereich von 0,1 Mikrosiemens bis 1 Mikrosiemens. Die Schaltstelle ist in dieser Ausgestaltung also an die Leitfähigkeit der menschlichen Haut angepasst, so dass diese als Überbrückungselement genutzt werden kann.

Alternativ oder ergänzend ist es möglich, dass die Trägerschicht mindestens eine elektrische Durchführung aufweist, wobei zumindest einer, vorzugsweise beide der Kontakte an der der Leiterbahn abgewandten Oberfläche der Trägerschicht angeordnet ist. Durch diese Ausgestaltung lässt sich die Trägerschicht in einem - erfindungsgemäß vorgesehenen - mehrschichtigen (Laminations-)Verbund einsetzen, in welchem die mit der Leiterbahn versehene Oberfläche der Trägerschicht durch eine weitere Schicht bedeckt ist. Mit anderen Worten ist dabei der RFID-Transponder zwischen den Schichten des Verbunds eingebettet. Um aber die Schaltstelle zwischen der geschlossenen Konfiguration und der unterbrochenen Konfiguration umschalten zu können, sind die Kontakte "außenliegend" an einer nicht verdeckten Oberfläche der Trägerschicht angeordnet. Es ist hierzu ergänzend oder alternativ möglich, eine oder mehrere der weiteren Schichten mit einer elektrischen Durchführung zu versehen, um so die Kontakte an einer Oberseite und/oder an einer Unterseite des Schichtverbunds anzuordnen. Dabei ist außerdem die Möglichkeit eröffnet, dass der Eine der Kontakte an der Oberseite und der Andere der Kontakte an der Unterseite angeordnet sind.

Es ist von Vorteil, wenn die Schaltstelle durch eine Druckeinwirkung aus der unterbrochenen Konfiguration in die geschlossene Konfiguration überführbar ist. Durch den Druck auf eine geeignete Stelle der Trägerschicht oder eine geeignete Stelle eines Schichtenverbunds lässt sich dann die Schaltstelle schließen und die RFID-Antenne wird aktiviert. Wird der Druck wieder gesenkt oder gänzlich weggenommen, so kann die unterbrochene Konfiguration wieder eingenommen werden.

Es hat sich außerdem als sinnvoll erwiesen, wenn die Schaltstelle erst bei Erreichen oder Überschreiten eines Druckschwellwertes in die geschlossene Konfiguration überführbar ist. Durch die Vorgabe eines Schwellwertes für den anzuwendenden Druck, lässt sich die Schaltgenauigkeit der Schaltstelle erhöhen, wobei zusätzlich gewährleistet ist, dass die Antenne nicht unbeabsichtigt aktiviert wird; beispielsweise dann, wenn sich die Trägerschicht oder das diese umfassende Wert- oder Sicherheitsdokument in der Hosentasche eines Benutzers befindet.

Zum Schutz vor einem unbefugten Auslesen des RFID-Chips hat es sich als vorteilhaft erwiesen, wenn die Schaltstelle als ein sogenannter Schließer gebildet ist, der sich in der Ruhestellung in der unterbrochenen Konfiguration befindet. Dies lässt sich insbesondere dadurch erzielen, dass bei der Ausübung von Druck auf die Schaltstelle eine Rückstellkraft wirksam ist, die derart ausgerichtet ist, um die Schaltstelle aus der geschlossenen Konfiguration in die unterbrochene Konfiguration zurückzuführen.

Die Trägerschicht entfaltet ihre Vorteile bei ihrem Einsatz in einem erfindungsgemäßen Wert- oder Sicherheitsdokument. Die für die Trägerschicht alleine erwähnten Vorteile und vorteilhaften Ausgestaltungen gelten daher in gleicher Weise für das erfindungsgemäße Wert- oder Sicherheitsdokument.

Das vorliegende Wert- oder Sicherheitsdokument liegt beispielsweise in Form eines Reisepasses, in Form eines Personalausweises, in Form eines Führerscheines oder in Form einer anderen ID-Karte vor. Das Wert- oder Sicherheitsdokument kann auch ein Zugangskontrollausweis, ein Fahrzeugschein, ein Fahrzeugbrief, ein Visum, ein Scheck, oder auch eine Scheck-, eine Bank-, eine Kredit- oder eine Barzahlungskarte, eine Kundenkarte, eine Gesundheitskarte, eine Chipkarte sein. Zudem kann das Wert- oder Sicherheitsdokument ein Firmenausweis, ein Berechtigungsnachweis, ein Mitgliedsausweis oder ein anderes ID-Dokument sein, wobei stets gewährleistet sein soll, dass dieses über einen RFID-Transponder verfügt.

Vorzugsweise liegt das Wert- oder Sicherheitsdokument in ID 1-, ID 2-, ID 3- oder in irgendeinem anderen Format vor, beispielsweise in Heftform, wie bei einem passähnlichen Gegenstand. Das Wert- oder Sicherheitsdokument ist im Allgemeinen ein Laminat aus mehreren Dokumentenlagen, die unter Wärmeeinwirkung und unter erhöhtem Druck flächig miteinander verbunden sind. Diese Wert- oder Sicherheitsdokumente sollen den normierten Anforderungen genügen, beispielsweise der ISO 10373 (Stand: 2011), der ISO/IEC 7810 (Stand: 2003) oder der ISO 14443 (Stand: 2018).

Vorzugsweise bestehen die Dokumentlagen aus der Trägerschicht mit daran angebrachter Leiterbahn des RFID-Transponders, einer oder mehrerer Zwischenschichten sowie der Deckschicht, wobei diese mit einem Material gebildet sind, das sich für eine Lamination eignet. Das Wert- oder Sicherheitsdokument kann aber vorzugsweise aus einem Polymer gebildet sein, das ausgewählt ist aus einer Gruppe, umfassend Polycarbonat (PC), insbesondere Bisphenol A-Polycarbonat oder ein Polycarbonat, gebildet mit einem geminal disubstituierten Bis-(hydroxyphenyl)-cycloalkan, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-Styrol-Copolymer (ABS) sowie deren Derivate, und/oder Papier und/oder Pappe und/oder Glas und/oder Metall und/oder Keramik. Außerdem kann das Dokument auch aus mehreren dieser Materialien hergestellt sein. Bevorzugt besteht es aus PC oder PC/TPU/PC. Die Polymere können entweder gefüllt oder ungefüllt vorliegen. Im letzteren Falle sind sie vorzugsweise transparent oder transluzent. Falls die Polymere gefüllt sind, sind sie opak. Die vorstehenden Angaben beziehen sich sowohl auf miteinander zu verbindende Folien als auch auf Flüssigformulierungen, die auf ein Vorprodukt des Dokuments aufgebracht werden, wie einen Schutz- oder Decklack. Bevorzugt wird das Dokument aus drei bis zwölf, vorzugsweise vier bis zehn Folien, hergestellt. Die Folien können ferner Druckschichten tragen. Ein solcherart gebildetes Laminat kann abschließend auch ein- oder beidseitig mit einem Schutz- oder Decklack oder mit einer Schutzfolie überzogen werden. Die Folie kann insbesondere ein Volumenhologramm, eine Folie mit einem Oberflächenhologramm (beispielsweise einem kinegraphischen Element) oder eine Kratzschutzfolie sein. Derart gebildete Overlaylagen verleihen dem Dokument zusätzlich die erforderliche Abriebfestigkeit.

Erfindungsgemäß liegt ein mehrschichtiger Verbund vor, wobei mit der Trägerschicht mindestens eine weitere Schicht verbunden ist, und wobei an der weiteren Schicht ein Überbrückungselement aufgebracht oder eingebracht ist. Damit kann das Überbrückungselement an oder in der weiteren Schicht zur Verstellung der Schaltstelle zwischen der geschlossenen Konfiguration und der geöffneten Konfiguration genutzt werden. Um unerwünschte Delaminationen des Verbundes zu vermeiden ergibt es Sinn, sowohl die Trägerschicht als auch alle weiteren Schichten aus Polycarbonat zu formen, so dass ein monolithisches Laminat entsteht.

Um dem Benutzer des Wert- oder Sicherheitsdokuments die Lage der Schaltstelle für deren Betätigung anzuzeigen, ist es möglich, aber von der Erfindung nicht umfasst, dass ein die Lage der Schaltstelle angebender Indikator vorhanden ist. An diesem Indikator oder im Bereich dieses Indikators kann der Benutzer dann die Kontakte der Schaltstelle aufgrund seiner Hautleitfähigkeit oder durch Ausübung eines entsprechenden Druckes überbrücken, um die Antenne des RFID-Transponders zu aktivieren.

Es ist aber erfindungsgemäß vorgesehen, dass das Wert- oder Sicherheitsdokument indikatorfrei gestaltet ist, derart, dass für das menschliche Auge diejenige Stelle nicht sichtbar, vorzugsweise auch nicht taktil erfassbar ist, an welcher die Überbrückung etwaiger Kontakte oder die Ausübung eines Druckes notwendig wären, um die Schaltstelle in die geschlossene Konfiguration zu überführen und damit die Antenne zu aktivieren. Durch die "versteckte" Lage der Position zur Betätigung der Schaltstelle, ist einerseits ein zusätzliches Sicherheitsmerkmal geschaffen, das die Fälschungssicherheit erhöht, und ist andererseits eine zusätzliche Sicherheitsfunktion für Diebstahl geschaffen, da einem Dritten auf diese Weise kein Hinweis auf die notwendige Aktivierung der Antenne gegebenen wird.

Eine erhöhte Fälschungssicherheit eines die Trägerschicht verwendenden Wert- oder Sicherheitsdokuments liegt also insbesondere dann vor, wenn die Schaltstelle für das menschliche Auge versteckt angeordnet ist. Die Fälschungssicherheit wird ergänzend auch dadurch verbessert, dass die Schaltstelle derart in das Dokument eingebunden ist, dass die Position der Schaltstelle taktil von einem Menschen nicht erfassbar, mithin also nicht ertastbar ist.

Die vorliegende Erfindung wird nachfolgend anhand von Figuren näher erläutert, wobei die dargestellten Beispiele lediglich exemplarischen Charakter haben und keine Einschränkung hinsichtlich der Tragweite der beschriebenen Erfindung darstellen. Es zeigen im Einzelnen:
- Figur 1: eine isometrische Darstellung eines Wert- oder Sicherheitsdokuments in Form einer Identitätskarte;
- Figur 2: eine schematische Schnittansicht durch eine weitere Identitätskarte entsprechend der Schnittlinie I-I aus Figur 1 ;
- Figur 3: eine schematische Draufsicht auf die Trägerschicht mit RFID-Transponder, dessen Leiterbahn mindestens eine Schaltstelle aufweist;
- Figur 4: eine Illustration des Schaltvorganges der Schaltstelle der Leiterbahn;
- Figur 5: eine schematische Schnittansicht eines laminierten Wert- oder Sicherheitsdokuments mit in der Trägerschicht und in der weiteren Schicht ausgebildeten elektrischen Durchführungen zur Bereitstellung eines ersten Kontakts an der Unterseite und eines zweiten Kontakts an der Oberseite des Wert- oder Sicherheitsdokuments; und
- Figur 6: eine schematische Schnittansicht eines laminierten Wert- oder Sicherheitsdokuments mit in der weiteren Schicht angeordnetem Überbrückungselement, das bei der (lokalen) Komprimierung des Wert- oder Sicherheitsdokuments zur Überbrückung der beiden Kontakte führt.

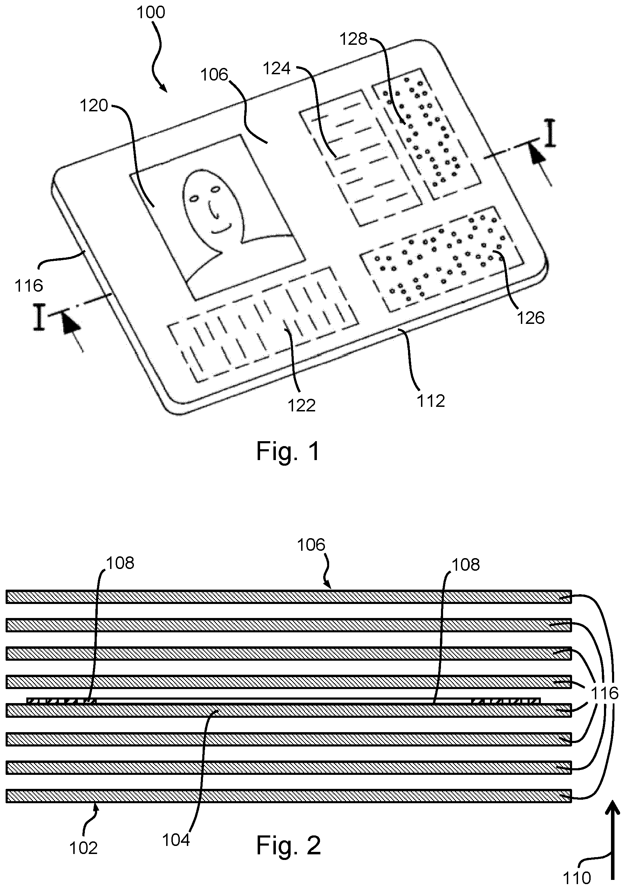

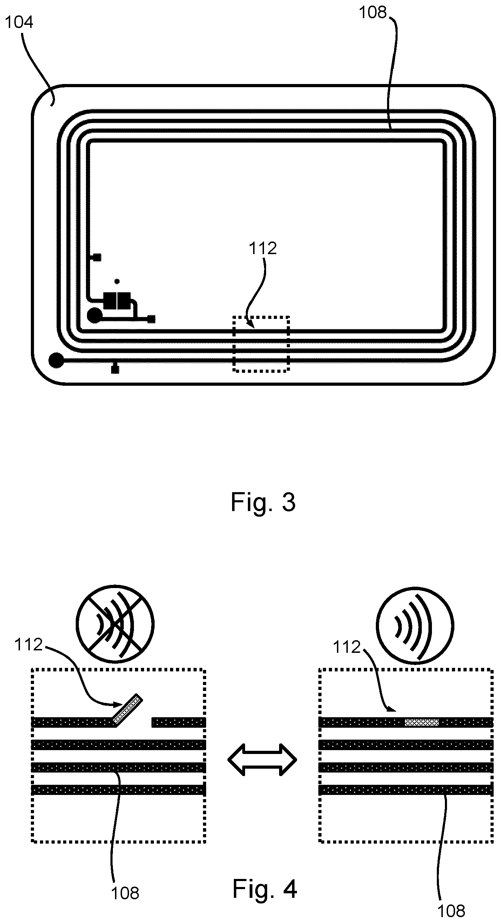

In Figur 1 ist ein Wert- oder Sicherheitsdokument 100 gezeigt, welches mit einem RFID-Transponder ausgestattet ist (Fig. 3). Das Wert- oder Sicherheitsdokument 100 kann ein Personaldokument, wie ein Reisepass, ein Personalausweis, ein Zugangsausweis oder dergleichen, eine Scheckkarte oder eine Banknote oder noch ein anderes Dokument, sein. Vorzugsweise ist das Wert- oder Sicherheitsdokument 100 ausgestaltet, bargeldlose Zahlungen mittels des RFID-Transponders auszuführen. Alle nachfolgenden Beispiele werden stellvertretend für andere Dokumententypen anhand einer derartigen Karte, mithin an einem kartenförmigen Wert- oder Sicherheitsdokument 100 beschrieben.

In den Figuren ist das Wert- oder Sicherheitsdokument 100 in Form einer Identitätskarte dargestellt, die beispielsweise als Laminat aus mehreren Schichten 116 gebildet ist. Eine dieser Schichten 116 ist eine Trägerschicht 104, auf die eine Leiterbahn 108 eines RFID-Transponders aufgebracht, insbesondere aufgedruckt ist (Fig. 2). Die Trägerschicht 104 und die weiteren Schichten 116 sind zusammengefügt worden. Beispielsweise können die Schichten 116 als Polymerlagen aus Polycarbonat und/oder PET gebildet sein. Die einzelnen Lagen können ungefüllt oder mit Füllstoffen gefüllt sein. In letzterem Falle sind sie opak, ansonsten transparent. Die Lagen können vorzugsweise derart miteinander verbunden sein, dass sie einen monolithischen Block bilden, der praktisch nicht gespalten werden kann.

Das Wert- oder Sicherheitsdokument 100 weist vorliegend eine Oberseite 106 und eine Unterseite 102 auf. Auf der Oberseite 106 befinden sich - rein exemplarisch - ein Gesichts- oder Portraitbild 120 des Inhabers der Karte sowie vier Datenfelder, nämlich ein erstes Datenfeld 122, ein zweites Datenfeld 124 mit Karten- und Inhaberdaten in Klarschrift sowie ein drittes Datenfeld 126 und ein viertes Datenfeld 128 mit den Karten- und Inhaberdaten, die beispielsweise in Blindenschrift, mithin in Braille-Schrift vorliegen. Die Daten im ersten und im zweiten Datenfeld 122, 124 sind beispielsweise durch Druckschichten hergestellt, die vorzugsweise auf einer äußeren Lage des Dokuments, aber unmittelbar unter der am weitest außen liegenden Schicht 116, liegen.

In Figur 2 sind nur zur Veranschaulichung die vor dem Laminieren noch vereinzelten, aber bereits in einer Stapelrichtung 110 angeordneten Lagen sichtbar dargestellt. Im fertigen Laminat sind die Grenzflächen nicht mehr sichtbar. Die äußeren Schichten 116 der Karte können als eine abschließende Kunststoff-Schutzfolie gebildet sein oder aus einem Schutzlack bestehen, der nach dem Laminieren auf die Karte aufgetragen worden ist. Die Kunststoff-Schutzfolie bzw. der Schutzlack ist vorzugsweise transparent, sodass darunter liegende Informationen von außen sichtbar sind. Insbesondere bleiben dabei aber eine oder mehrere zwischenliegende Schichten 116, bspw. die zwischenliegende Schicht 116 eines gedruckten Portraitbilds 120 sichtbar, die vorzugsweise unmittelbar neben oder hinter einer der am weitest außen liegenden Schichten 116 angeordnet ist bzw. angeordnet sind.

Aus Figur 2 wird außerdem ersichtlich, dass auf die Trägerschicht 104 die Antennenspule, d.h. die Leiterbahn 108 des RFID-Transponders aufgebracht wurde, bevor die einzelnen Schichten 116 laminiert, mithin miteinander verschmolzen werden. Es besteht die Möglichkeit, dass die Trägerschicht 104 auch in einer anderen Position innerhalb des Schichtverbunds angeordnet ist, so dass sich eine in Bezug auf eine Stapelrichtung 110 andere Höhenlage für die Trägerschicht 104 und den daran angebrachten RFID-Transponder im Schichtverbund ergibt.

In Figur 3 ist eine Draufsicht der Trägerschicht 104 des Wert- oder Sicherheitsdokument 100 gezeigt. Auf diese Trägerschicht 104 ist der RFID-Transponder mit seiner die Antennenspule bildenden Leiterbahn 108 aufgebracht, die vorliegend eine Silberpaste umfasst oder aus einer solchen besteht. Die Leiterbahn 108 und damit der RFID-Transponder weisen in dem gepunkteten Bereich die Besonderheit einer Schaltstelle 112 auf. Die Leiterbahn 108 kann aber auch mehrere solcher Schaltstellen 112 umfassen.

Anhand der Illustration nach Figur 4 ist zu erkennen, dass die Schaltstelle 112 ausgebildet ist, überführt zu werden zwischen einer geschlossenen Konfiguration, in welcher die Leiterbahn 108 eine aktive oder aktivierte Antenne des RFID-Transponders ausbildet (illustriert durch das durchgestrichene Signal-Symbol; Fig. 4 rechts), und einer unterbrochenen Konfiguration, in welcher die Leiterbahn 108 eine inaktive oder deaktivierte Antenne des RFID-Transponders ausbildet (illustriert durch das nicht durchgestrichene Signal-Symbol; Fig. 4 links).

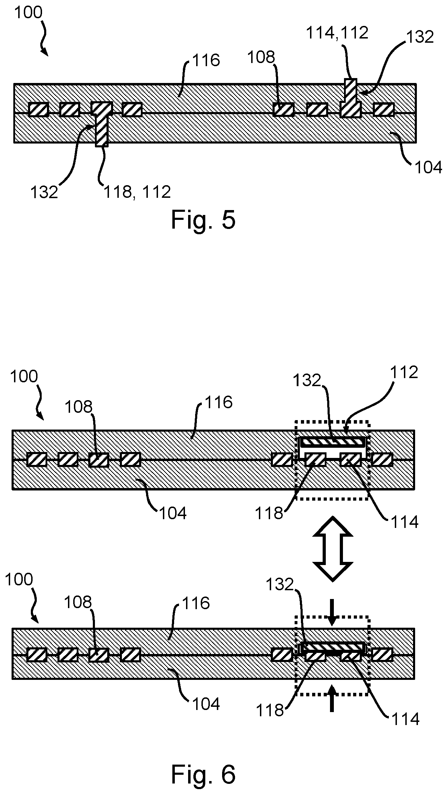

In Figuren 5 und 6 ist zu erkennen, dass sich die Überführung zwischen der unterbrochenen Konfiguration und geschlossenen Konfiguration beispielsweise durch eine Schaltstelle 112 mit zwei Kontakten 114, 118 realisieren lässt. Die Kontakte 114, 118 der Schaltstelle 112 sind mit einem eine elektrische Mindestleitfähigkeit aufweisenden Überbrückungselement 130 elektrisch verbindbar, um die Schaltstelle 112 so aus der unterbrochenen Konfiguration mit inaktiver Antenne in die geschlossene Konfiguration mit aktivierter Antenne zu überführen.

Im Beispiel nach Figur 5 ist die Trägerschicht 104 mit einer elektrischen Durchführung 132 versehen und der erste Kontakt 114 ist mithilfe dieser Durchführung 132 an der der Leiterbahn 108 abgewandten Oberfläche der Trägerschicht 104 angeordnet. Die zur Trägerschicht 104 benachbarte weitere Schicht 116 weist ebenfalls eine elektrische Durchführung 132 auf, wodurch der zweite Kontakt 118 auf der der Leiterbahn 108 abgewandten Oberfläche der weiteren Schicht 116 angeordnet ist.

In einer solchen Ausgestaltung ist die Möglichkeit eröffnet, dass als Überbrückungselement 130 ein Objekt mit einer der Mindestleitfähigkeit entsprechenden elektrodermalen Aktivität in Betracht kommt. Das elektrische Überbrückungselement 130 kann also ein Teil eines menschlichen Körpers, insbesondere ein Teil der menschlichen Hand oder der menschlichen Fingers sein. Durch das Berühren beider Kontakte 114, 118 durch einen Benutzer wird die Schaltstelle 112 in die geschlossene Konfiguration überführt und die RFID-Antenne aktiviert.

Im Beispiel nach Figur 6 ist das Überbrückungselement 130 in diejenige Schicht 116 eingebettet, die benachbart zu der Trägerschicht 104 angeordnet ist. Hierzu kann eine an das Überbrückungselement angepasste Ausnehmung in die Schicht 116 eingebracht sein. Das Überbrückungselement 130 ist elektrisch leitfähig und vorzugsweise ebenfalls aus Silberleitpaste gebildet. Andere elektrisch leitfähige Materialien sind ebenfalls einsetzbar. In dieser Konfiguration ist die Schaltstelle 112 durch eine Druckeinwirkung aus der unterbrochenen Konfiguration in die geschlossene Konfiguration überführbar. Es ist alternativ möglich, dass das Überbrückungselement 130 in der Trägerschicht 104 selbst eingebettet ist, um die Schaltstelle 112 durch eine Druckeinwirkung in die geschlossene Konfiguration zu überführen. Für beide Gestaltungen ist vorgesehen, dass die Schaltstelle 112 erst bei Erreichen oder Überschreiten eines Druckschwellwertes in die geschlossene Konfiguration überführt wird, um ein unbeabsichtigtes Aktivieren der Antenne des RFID-Transponders zu vermeiden.

In der gezeigten Variante, ist das Material der weiteren Schicht 116 mit dem Überbrückungselement 130 derart gewählt, dass dieses unter Einwirkung mit Druck (dargestellt durch die schwarzen Pfeile) komprimiert werden kann. Beim Komprimieren überbrückt dann das Überbrückungselement 130 die beiden Kontakte 114, 118 der Schaltstelle 112 und aktiviert so die Antenne.

Bei der Ausübung von Druck in und entgegen der Stapelrichtung 110 ist eine der Druckeinwirkung entgegen gerichtete Rückstellkraft wirksam, die somit derart ausgerichtet ist, um die Schaltstelle 112 aus der geschlossenen Konfiguration in die unterbrochene Konfiguration zurückzuführen. Mit anderen Worten kann also ein Benutzer auf eine bestimmte Stelle des Wert- oder Sicherheitsdokuments 100 drücken, um die Antenne bewusst zu aktivieren. Beim Loslassen führt die Rückstellkraft zu einem automatisierten Inaktivstellen der Antenne.

Die Position, an welcher gedrückt werden muss, um die Antenne zu aktivieren, lässt sich durch einen die Lage der Schaltstelle 112 angebenden - von der Erfindung aber nicht umfassten - Indikator angeben. Dieser kann beispielsweise ein Aufdruck auf dem Wert- oder Sicherheitsdokument 100 sein. Es ist aber erfindungsgemäß vorgesehen, dass das Wert- oder Sicherheitsdokument 100 indikatorfrei gestaltet ist, derart, dass für das menschliche Auge diejenige Stelle nicht sichtbar, vorzugsweise auch nicht taktil erfassbar ist, an welcher die Überbrückung etwaiger Kontakte 114, 118 oder die Ausübung eines Druckes notwendig wären, um die Schaltstelle 112 in die geschlossene Konfiguration zu überführen und damit die Antenne zu aktivieren. Durch die "versteckte" Lage der Position zur Betätigung der Schaltstelle 112 ist einerseits ein zusätzliches Sicherheitsmerkmal geschaffen, das die Fälschungssicherheit erhöht, und ist andererseits eine zusätzliche Sicherheitsfunktion für Diebstahl geschaffen, da einem Dritten auf diese Weise kein Hinweis auf die notwendige Aktivierung der Antenne gegebenen wird.

Mit der erfindungsgemäßen Trägerschicht 104 und dem erfindungsgemäßen Wert- oder Sicherheitsdokument 100 ist also eine zusätzliche Absicherung des RFID-Transponders gewährleistet.

### BEZUGSZEICHENLISTE

- 100: Wert- oder Sicherheitsdokument
- 102: untere Substratoberfläche, untere Kartenoberfläche, Unterseite
- 104: Trägerschicht
- 106: obere Substratoberfläche, obere Kartenoberfläche, Oberseite
- 108: Leiterbahn
- 110: Stapelrichtung
- 112: Schaltstelle
- 114: erster Kontakt
- 116: Schicht (Polymerfolie)
- 118: zweiter Kontakt
- 120: Portraitbild
- 122: erstes Datenfeld
- 124: zweites Datenfeld
- 126: drittes Datenfeld
- 128: viertes Datenfeld
- 130: Überbrückungselement
- 132: Durchführung

## Patentansprüche

1. Wert- oder Sicherheitsdokument (100) umfassend einen RFID-Transponder, welches als ein laminierter Schichtverbund aus mehreren Schichten (116) gebildet ist, wovon eine der Schichten (116) eine innerhalb des Schichtverbunds positionierte Trägerschicht (104) ist, auf welcher eine elektrische Leiterbahn (108) des RFID-Transponders aufgebracht ist, wobei die Leiterbahn (108) mindestens eine Schaltstelle (112) aufweist, die ausgebildet ist, überführt zu werden zwischen einer geschlossenen Konfiguration, in welcher die Leiterbahn (108) eine aktive oder aktivierte Antenne des RFID-Transponders ausbildet, und einer unterbrochenen Konfiguration, in welcher die Leiterbahn (108) eine inaktive oder deaktivierte Antenne des RFID-Transponders ausbildet, **dadurch gekennzeichnet, dass** die Schaltstelle (112) für das menschliche Auge versteckt angeordnet ist.

2. Wert- oder Sicherheitsdokument (100) nach Anspruch 1, **dadurch gekennzeichnet, dass** die Schaltstelle (112) zwei Kontakte (114, 118) umfasst, die mit einem eine elektrische Mindestleitfähigkeit aufweisenden Überbrückungselement (130) elektrisch verbindbar sind, um die Schaltstelle (112) in die geschlossene Konfiguration zu überführen.

3. Wert- oder Sicherheitsdokument (100) nach Anspruch 2, **dadurch gekennzeichnet, dass** das Überbrückungselement (130) ein Objekt mit einer der Mindestleitfähigkeit entsprechenden elektrodermalen Aktivität ist.

4. Wert- oder Sicherheitsdokument (100) nach Anspruch 2 oder 3, **gekennzeichnet durch** mindestens eine elektrische Durchführung (132), wobei zumindest einer der Kontakte (114, 118) an der der Leiterbahn (108) abgewandten Oberfläche der Trägerschicht (104) angeordnet ist.

5. Wert- oder Sicherheitsdokument (100) nach einem der Ansprüche 1 bis 4, **dadurch gekennzeichnet, dass** die Schaltstelle (112) durch eine Druckeinwirkung in die geschlossene Konfiguration überführbar ist.

6. Wert- oder Sicherheitsdokument (100) nach Anspruch 5, **dadurch gekennzeichnet, dass** die Schaltstelle (112) erst bei Erreichen oder Überschreiten eines Druckschwellwertes in die geschlossene Konfiguration überführbar ist.

7. Wert- oder Sicherheitsdokument (100) nach Anspruch 5 oder 6, **dadurch gekennzeichnet, dass** während der Ausübung des Druckes eine Rückstellkraft wirksam ist, die derart ausgerichtet ist, um die Schaltstelle (112) aus der geschlossenen Konfiguration in die unterbrochene Konfiguration zurückzuführen.

8. Wert- oder Sicherheitsdokument (100) nach einem der vorhergehenden Ansprüche, **dadurch gekennzeichnet, dass** die Schaltstelle (112) derart in das Dokument eingebunden ist, dass die Position der Schaltstelle (112) taktil von einem Menschen nicht erfassbar ist.

## Claims

1. A value or security document (100) comprising an RFID transponder which is formed as a laminated layer composite of a plurality of layers (116), one of the layers (116) being a carrier layer (104) positioned within the layer composite, on which an electrical conductor track (108) of the RFID transponder is applied, the conductor track (108) having at least one switching point (112) which is designed to be transferred between a closed configuration, in which the conductor track (108) forms an active or activated antenna of the RFID transponder, and an interrupted configuration, in which the conductor track (108) forms an inactive or deactivated antenna of the RFID transponder, **characterized in that** the switching point (112) is arranged so as to be hidden from the human eye.

2. The value or security document (100) according to claim 1, **characterized in that** the switching point (112) comprises two contacts (114, 118) which can be electrically connected to a bridging element (130) having a minimum electrical conductivity in order to transfer the switching point (112) to the closed configuration.

3. The value or security document (100) according to claim 2, **characterized in that** the bridging element (130) is an object with an electrodermal activity corresponding to the minimum conductivity.

4. The value or security document (100) according to claim 2 or 3, **characterized by** at least one electrical feedthrough (132), wherein at least one of the contacts (114, 118) is arranged on the surface of the carrier layer (104) facing away from the conductor track (108).

5. The value or security document (100) according to any of claims 1 to 4, **characterized in that** the switching point (112) can be transferred to the closed configuration by the action of pressure.

6. The value or security document (100) according to claim 5, **characterized in that** the switching point (112) can only be transferred to the closed configuration when a pressure threshold value is reached or exceeded.

7. The value or security document (100) according to claim 5 or 6, **characterized in that** a restoring force is effective during the exertion of the pressure, which is oriented in such a way as to return the switching point (112) from the closed configuration to the interrupted configuration.

8. The value or security document (100) according to any of the preceding claims, **characterized in that** the switching point (112) is incorporated into the document in such a way that the position of the switching point (112) cannot be detected tactilely by a human being.

## Revendications

1. Document de valeur ou de sécurité (100) comprenant un transpondeur RFID qui est formé comme un composite stratifié de plusieurs couches (116), dont une des couches (116) est une couche de support (104) positionnée à l'intérieur du composite stratifié, sur laquelle une piste conductrice électrique (108) du transpondeur RFID est appliquée, dans lequel la piste conductrice (108) présente au moins un point de commutation (112) qui est conçu pour être transféré entre une configuration fermée, dans laquelle la piste conductrice (108) forme une antenne active ou activée du transpondeur RFID, et une configuration interrompue, dans laquelle la piste conductrice (108) forme une antenne inactive ou désactivée du transpondeur RFID, **caractérisé en ce que** le point de commutation (112) est disposé de manière cachée pour l'oeil humain.

2. Document de valeur ou de sécurité (100) selon la revendication 1, **caractérisé en ce que** le point de commutation (112) comprend deux contacts (114, 118) qui peuvent être connectés électriquement à un élément de pontage (130) présentant une conductivité électrique minimale pour faire passer le point de commutation (112) dans la configuration fermée.

3. Document de valeur ou de sécurité (100) selon la revendication 2, **caractérisé en ce que** l'élément de pontage (130) est un objet avec une activité électrodermale correspondant à la conductivité minimale.

4. Document de valeur ou de sécurité (100) selon la revendication 2 ou 3, **caractérisé par** au moins une traversée électrique (132), dans lequel au moins un des contacts (114, 118) est disposé au niveau de la surface de la couche support (104) opposée à la piste conductrice (108).

5. Document de valeur ou de sécurité (100) selon l'une quelconque des revendications 1 à 4, **caractérisé en ce que** le point de commutation (112) peut être transféré dans la configuration fermée sous une action de pression.

6. Document de valeur ou de sécurité (100) selon la revendication 5, **caractérisé en ce que** le point de commutation (112) ne peut être transféré dans la configuration fermée que lorsqu'une valeur seuil de pression est atteinte ou dépassée.

7. Document de valeur ou de sécurité (100) selon la revendication 5 ou 6, **caractérisé en ce que**, lorsque la pression est exercée, une force de rappel qui est orientée de manière à ramener le point de commutation (112) de la configuration fermée à la configuration interrompue est active.

8. Document de valeur ou de sécurité (100) selon l'une quelconque des revendications précédentes, **caractérisé en ce que** le point de commutation (112) est intégré dans le document de sorte que la position du point de commutation (112) ne puisse pas être détectée tactilement par un humain.
